# EUROPÄISCHE PATENTANMELDUNG

(11) **EP 2 353 400 A1**
(43) Veröffentlichungstag der Anmeldung: **10.08.2011**
(21) Anmeldenummer: 10001145.1
(22) Anmeldetag: 04.02.2010
(51) Int. Cl.: A23D 7/05, A23D 9/05, A23L 1/314, A23L 1/317, C11B 15/00

(54) **Verfahren zur Herstellung von tierische Fette enthaltenden Lebensmitteln**

(71) Anmelder: Linde AG, 80331 München (DE)
(72) Erfinder: Berghoff, Rudolf Erwin, 85716 Unterschleissheim (DE)
(74) Vertreter: Gellner, Bernd

(57) **Zusammenfassung**

Die Erfindung betrifft ein Verfahren zur Herstellung eines Lebensmittelprodukts, welches tierische Fette und weitere Zutaten enthält, welches **dadurch gekennzeichnet ist, dass** zumindest ein Teil des Fettes in die flüssige Phase gebracht, im flüssigen Zustand versprüht (6), durch Wärmeaustausch, insbesondere direkten Wärmeaustausch, mit einem tiefkalten flüssigen Gas (10), bevorzugt mit flüssigem Stickstoff, schockartig abgekühlt und in ein Granulat (12) überführt wird und dass das Granulat (12) mit den weiteren Zutaten zu dem Lebensmittelprodukt verarbeitet wird.

## Beschreibung

Die Erfindung betrifft ein Verfahren zur Herstellung eines Lebensmittelprodukts, welches tierische Fette und weitere Zutaten enthält.

Bei der Herstellung von Lebensmittelprodukten werden häufig mehrere unterschiedliche Komponenten oder Inhaltsstoffe zusammengeführt und verarbeitet. Fette oder Fettgemische sind dabei grundlegende Bestandteile von vielen Lebensmittelprodukten.

Fette weisen bei Umgebungstemperatur einen festen, kristallinen oder amorphen und einen flüssigen Anteil auf. In fett- und ölhaltigen Produkten stellt dabei der Festanteil im Fett, der sogenannte "Solid Fat Content" oder kurz SFC, eine entscheidende Größe für die Qualität und für den Verarbeitungsprozess der Lebensmittelprodukte dar. Ein hoher Festanteil (SFC) erhöht in der Regel die Qualität eines Fettes bzw. Lebensmittels. Manche Lebensmittel weisen ihre optimale Qualität auch bei einem ganz bestimmten Festanteil (SFC) auf. Man geht davon aus, dass insbesondere die Menge des kristallinen Fettanteils den SFC erhöht, aber auch der amorphe Anteil kann den SFC steigern.

Herkömmlicherweise wird die Kristallbildung und das Wachstum der Fette in sogenannten Kratzkühlern durchgeführt. Hierbei wird flüssiges Fett in einen Behälter gegeben, dessen Wände beispielsweise mit einem Kältemittel gekühlt werden, und das an den Wänden des Behälters kristallisierende Fett wird abgekratzt.

Bei der Verwendung von Kratzkühlern ist der Aufwand zur Erzielung des gewünschten Ergebnisses relativ hoch und die Prozessführung schwierig. Die Einstellung eines bestimmten SFC, um so ein optimales Produkt zu erhalten, ist nicht oder nur sehr schwer möglich, da Temperatur, Temperaturverlauf, Prozessdauer, Fettmenge, Fettzusammensetzung, Fettherkunft und die übrigen Produktkomponenten sowie deren Anteile und andere Parameter das Ergebnis stark beeinflussen.

Der Prozessaufwand bzw. die Prozesszeit, steigt in der Regel mit der Höhe des gewünschten beziehungsweise notwendigen Kristallisationsgrades. Zur Erzielung hoher Kristallisationsgrade und damit eines hohen SFC muss häufig auf Fette ausgewichen werden, die bereits einen höheren natürlichen Feststoffgehalt aufweisen oder deren Schmelzprofil bei höheren Temperaturen liegt. Diese Fette sind aber in der Regel teurer als Fette mit geringerem Feststoffgehalt bzw. niedrigerem Schmelzprofil.

Bei der Herstellung von fleisch-, fisch- oder wursthaltigen Lebensmitteln wird das Fett, welches aus anderen Prozessschritten anfällt, bisher in seiner ursprünglichen Form mit einem Fleischwolf zerkleinert oder geschmolzen und als Flüssigfett oder pastös dem herzustellenden Produkt beigemengt und weiterverarbeitet. Die Fette werden hinsichtlich einer Steigerung des Feststoffanteils und/oder des Kristallinitätsgrades nicht vorbehandelt, das heißt eine gezielte Optimierung der Produktqualität durch Einstellung der Fetteigenschaften erfolgt bisher nicht.

Aufgabe vorliegender Erfindung ist es daher, ein Verfahren zur Herstellung von tierische Fette enthaltenden Lebensmittelprodukten mit einem bestimmten SFC aufzuzeigen.

Ferner soll ein Verfahren zur Herstellung von tierische Fette enthaltenden Lebensmittelprodukten aufgezeigt werden, welches eine möglichst feine Verteilung der tierischen Fette in dem Lebensmittelprodukt ermöglicht.

Aufgabe der Erfindung ist es weiter, ein Verfahren zur Herstellung von Lebensmittelprodukten mit einem definierten Gehalt an tierischen Fetten zu entwickeln.

Es soll außerdem ein Verfahren zur Herstellung von Lebensmittelprodukten aufgezeigt werden, welches es erlaubt, den Anteil an Emulgatoren und Stabilisatoren im Vergleich zu einem herkömmlich hergestellten Lebensmittelprodukt zu reduzieren.

Eine weitere Aufgabe der Erfindung ist es, ein Verfahren zur Herstellung von Lebensmittelprodukten mit verbesserter Homogenität und Stabilität aufzuzeigen.

Eine weitere Aufgabe der Erfindung ist es, ein Verfahren zur Herstellung von Lebensmittelprodukten zu entwickeln, bei deren Verspeisen sich subjektiv ein verbessertes Mundgefühl einstellt.

Obige Aufgaben sollen insbesondere bei der Herstellung von Fleisch-, Wurst und Fischprodukten gelöst werden.

Eine oder mehrere der oben genannten Aufgaben werden durch ein Verfahren zur Herstellung eines tierische Fette und weitere Zutaten enthaltenden Lebensmittelprodukts gelöst, welches **dadurch gekennzeichnet ist, dass** zumindest ein Teil des Fettes in die flüssige Phase gebracht, im flüssigen Zustand versprüht, durch Wärmeaustausch, insbesondere direkten Wärmeaustausch, mit einem tiefkalten flüssigen Gas, bevorzugt mit flüssigem Stickstoff, schockartig abgekühlt und in ein Granulat überführt wird und dass das Granulat mit den weiteren Zutaten zu dem Lebensmittelprodukt verarbeitet wird.

Der Begriff "Granulat" soll insbesondere ein partikelförmiges, pulverförmiges oder körniges Material umfassen.

Erfindungsgemäß werden tierische Fette, die einem Lebensmittelprodukt beigefügt werden sollen, dem Zutatengemenge, aus dem das Produkt hergestellt wird, erst nach der erfindungsgemäßen Vorbehandlung und Überführung in ein Granulat oder Pulver zugegeben. Zumindest ein Teil des für das Lebensmittelprodukt verwendeten tierischen Fettes wird zunächst in den flüssigen Aggregatszustand gebracht. Das Fett oder ein Teil des Fettes wird hierzu entweder unter Wärmeeinwirkung geschmolzen oder in einem Lösungsmittel, wie zum Beispiel Wasser oder Öl, oder in anderen Rezepturbestandteilen gemischt.

Im Falle des Schmelzens der Komponente erfolgt die Erhitzung aus Gründen der Energieeinsparung vorzugsweise nur bis zu der für den folgenden Sprühprozess notwendigen Minimaltemperatur. Wird die Fettkomponente stattdessen in einem Lösungsmittel gelöst, wird von Vorteil nur die minimal notwendige Lösungsmittelmenge verwendet.

Anschließend wird das so erhaltene flüssige Fett versprüht, wobei sich dieses in feinste Tröpfchen zerteilt und mit dem umgebenden Gas einen feinen Nebel bildet. Diese kleinen Flüssigkeitströpfchen werden plötzlich abgekühlt, so dass diese ohne zu agglomerieren in den festen Aggregatszustand übergehen und eine granulare bzw. pulverförmige Phase bilden.

Die Abkühlung des versprühten Fettes erfolgt durch Wärmeaustausch mit einem tiefkalten flüssigen Gas, bevorzugt mit flüssigem Stickstoff. Das Fett wird vorzugsweise durch direkten Wärmeaustausch mit dem tiefkalten flüssigen Gas abgekühlt. Hierzu wird der Strom an versprühten fein zerteilten Fetttröpfchen mit flüssigem Stickstoff in direkten Kontakt gebracht, wobei die Fetttröpfchen schlagartig kristallisieren.

Vorzugsweise erfolgt die schockartige Abkühlung der versprühten Fetttröpfchen durch einen ebenfalls versprühten Strom flüssigen Stickstoffs. Besonders bevorzugt werden der Fetttröpfchenstrom und der Stickstoffstrom im Gleichstrom miteinander in Kontakt gebracht. In der Regel werden hierzu sowohl das flüssige Fett als auch der flüssige Stickstoff über Düsen nach unten so abgestrahlt, dass der entstehende Fettnebel und der flüssige Stickstoff in intensiven Kontakt miteinander kommen.

Auf diese Weise erhält man ein partikelförmiges, schüttfähiges Material, welches sich schnell und einfach weiter verarbeiten lässt. Das Fettgranulat wird mit den weiteren Zutaten gemischt und gegebenenfalls weiteren Verarbeitungsschritten unterzogen. Bei Einsatz des erfindungsgemäßen Verfahrens ist das Fett in dem Lebensmittelprodukt deutlich feindisperser verteilt als bei den herkömmlichen Herstellungsverfahren. Die Homogenität und Stabilität der Lebensmittelprodukte wird wesentlich verbessert.

Mittels des erfindungsgemäßen Verfahrens wird ein höherer SFC erreicht. Das heißt, der feste Anteil und insbesondere der kristalline Anteil des Fettes wird im Vergleich zu herkömmlich verarbeitetem Fett deutlich erhöht, was sich positiv auf die Qualität des Produkts auswirkt. Die tierischen Fette lassen sich als Pulver bzw. Granulat auch deutlich besser unter den übrigen Zutaten des herzustellenden Lebensmittelprodukts verteilen.

Dadurch verbessert sich beim Verspeisen des Lebensmittelprodukts das subjektive Mundgefühl. Bei gleich bleibendem oder sogar noch verbessertem Geschmack wird es möglich, den Fettgehalt des Lebensmittelprodukts zu reduzieren. Dies ist besonders für Produkte, wie z.B. Hamburger, vorteilhaft, da das, z.B. mit einem Fleischwolf zerkleinerte, Muskelfleisch gleichmäßig mit den erfindungsgemäßen Fettpartikeln eingehüllt werden kann. Durch die hohe spezifische Oberfläche kommt das gesamte Fett zur Wirkung und unterstützt damit den Geschmack und das Mundgefühl. Ferner besitzen erfindungsgemäß hergestellte Fleisch- und Wurstprodukte eine festere Konsistenz.

Neben der genannten Verringerung des Fettanteils im Lebensmittelprodukt ist es auch denkbar, den Fettgehalt bei gleicher Konsistenz und Festigkeit der Produkte zu erhöhen, das heißt, mehr Fett im Produkt unterzubringen. Bei speziellen Wurst- und Fleischpasten wird eine optimale Qualität bei einem bestimmten - nicht unbedingt maximalen - Anteil an festen Fettbestandteilen und insbesondere einem bestimmten Anteil kristallinen Fetts erzielt. Die Erfindung stellt hier ein Verfahren zur Verfügung, mit dem der Fettgehalt eines Lebensmittelprodukts, der Anteil der festen Fettbestandteile und der Anteil des kristallinen Fetts auf einen vorgegebenen Wert gezielt eingestellt werden können.

Bei der Herstellung von Fleischpasten und Wurstwaren werden zerkleinertes Fleisch, Fett, Muskelgewebe und/oder weitere tierische Organe mit Zutaten, wie zum Beispiel Salz, Gewürzen und Wasser, zu einer Produktemulsion verarbeitet. Diese Emulsion wird bisher durch zwischen den Fettpartikeln und den übrigen Bestandteilen befindliche Myosinfilme stabilisiert. Es hat sich nun gezeigt, dass das erfindungsgemäß hergestellte Granulat von tierischen Fetten bei Wurstwaren und Fleischpasten die Stabilisierung der Produktemulsion deutlich erhöht.

Die Erfindung erlaubt es, den Anteil an Emulgatoren und Stabilisatoren im Vergleich zu einem herkömmlich hergestellten Lebensmittelprodukt deutlich zu reduzieren. Es ist teilweise sogar möglich, völlig auf Emulgatoren und Stabilisatoren zu verzichten. Auf diese Weise können einerseits die Herstellkosten reduziert werden, andererseits wird ein qualitativ hochwertiges Produkt erzeugt. Insbesondere Verbraucher, die allergisch auf bestimmte Zusatzstoffe reagieren, profitieren von den erfindungsgemäß hergestellten Lebensmittelprodukten.

In einer bevorzugten Ausführungsform wird das Fett im flüssigen Zustand unter erhöhten Druck gesetzt, zu einer Sprühdüse geleitet und versprüht. Es ist ebenso möglich, das flüssige Fett mittels eines Treibgases einer Düse zuzuführen, über die das Fett abgestrahlt und fein verteilt wird. Das flüssige Fett kann in diesem Fall im Wesentlichen drucklos mit dem Treibgas zusammengeführt werden. Als Treibgas wird vorzugsweise gasförmiger Stickstoff verwendet. Auch andere Zerstäubungs- bzw. Sprühtechniken können eingesetzt werden. Von Vorteil wird über die Art der Sprühtechnik, die Wahl der Sprühdüse und über die Sprühparameter, wie beispielsweise Druck und Geschwindigkeit des flüssigen Fetts unmittelbar vor dem Versprühen, die Tröpfchengröße und damit die Partikelgröße des bei der anschließenden Abkühlung erzeugten Granulats eingestellt.

Das Versprühen des verflüssigten Fettes kann mit Ein- oder Zweistoffdüsen erfolgen. Bei Verwendung von Einstoffdüsen sind je nach gewünschter Tropfen-/Partikelgröße, Drücke zwischen 5 und 70 bar, bei sehr kleinen Partikelgrößen auch bis zu 300 bar notwendig. In Zweistoffdüsen kann das flüssige Fett bei niedrigen Drücken zwischen ca. 1 und 8 bar gefördert werden. Der Druck des Gasstroms, welcher die Zerstäubung bewirkt, liegt üblicherweise um etwa 1 bis 2 bar höher.

Es hat sich gezeigt, dass es günstig ist, neben öl- und/oder fetthaltigen Komponenten des Lebensmittelprodukts auch andere schmelzbare Komponenten vor der Zusammenführung mit den übrigen Zutaten erfindungsgemäß in ein Granulat bzw. Pulver zu überführen. Abhängig von der Rezeptur, nach der das Lebensmittelprodukt hergestellt wird, kann es sogar günstig sein, alle Komponenten vor der Vermischung in ein Granulat zu überführen.

Häufig ist es aber ausreichend, nur die Öl- und/oder Fettkomponenten in einen granulären Zustand zu bringen. Nach der Verarbeitung der granulierten Öl- bzw. Fettkomponenten mit den übrigen Zutaten erhält man ein stabileres und geschmacksintensiveres Lebensmittelprodukt als dies ohne die erfindungsgemäße Verwendung von granulierten Ölen bzw. Fetten der Fall ist.

Nach der Erzeugung des Granulats wird die weitere Verarbeitung mit den übrigen Zutaten von Vorteil bei einer Temperatur von weniger als 25°C, bevorzugt im Temperaturbereich von 0°C bis 15 °C, vorgenommen. Je nach dem, welche Zutaten zu dem Produkt verarbeitet werden, können sogar Temperaturen von weniger als 0°C wünschenswert sein.

Die Erfindung beruht wesentlich auf der schlag- oder schockartigen Umwandlung einer oder mehrerer flüssiger, pastöser oder fester tierischer Fette in einen partikelförmigen, granularen oder pulverförmigen Zustand. In diesem Zustand lassen sich die tierischen Fette besser mit den anderen Zutaten mischen und man erhält eine deutlich feinere Dispersion. Insbesondere schwer mischbare Produkte lassen sich wesentlich einfacher in Emulsionen überführen, ohne dass die einzelnen Phasen zu größeren Bereichen zusammenwachsen. Durch die verbesserte Verteilung der Fette in dem Produkt werden Geschmack und Mundgefühl deutlich verbessert.

Vorzugsweise wird mindestens ein Teil des Fettes in ein Granulat überführt, welches Teilchengrößen kleiner 1000 Mikrometer, bevorzugt kleiner als 300 Mikrometer, besitzt. Von Vorteil sollte das Granulat möglichst kleine Teilchen aufweisen. Je nach Anwendung kann es günstig sein, Teilchen mit einem Durchmesser kleiner 100 Mikrometer, kleiner 10 Mikrometer oder kleiner 1 Mikrometer einzusetzen. In der Praxis besteht das Granulat häufig aus Teilchen mit einer Größe zwischen 0,1 Mikrometer und 1000 Mikrometer, bevorzugt zwischen 1 Mikrometer und 300 Mikrometer.

In den eingangs erwähnten Kratzkühlern wird eine Paste erzeugt, in der sich feste Fettkristalle befinden. Diese Fettkristalle können aber unkontrolliert wachsen, so dass die Größe der Fettteilchen weder eingestellt noch gesteuert werden kann. Die erfindungsgemäß hergestellten Fettteilchen sind dagegen in der Größe beständig und wachsen nicht weiter.

Das Fett wird hierzu im flüssigen Aggregatszustand so fein zerstäubt bzw. versprüht, dass sich entsprechend kleine Tröpfchen bilden, die anschließend erfindungsgemäß schockgekühlt und in den festen Aggregatszustand überführt werden. Die Verwendung dieses feinen Fett-Granulats erleichtert die Herstellung der gewünschten Emulsionen, aus denen beispielsweise das Wurst-, Fleisch oder Fischprodukt besteht. Die Verteilung des Fetts in den übrigen Zutaten ist deutlich homogener als bei den üblichen Herstellungsverfahren, bei denen das Fett im flüssigen Zustand mit den anderen Komponenten gemischt wird.

Die Efindung hat zahlreiche Vorteile im Vergleich zu den bekannten Herstellungsverfahren für tierische Fette enthaltende Lebensmittelprodukte. Durch den Wärmeaustausch mit dem tiefkalten flüssigen Gas wird das flüssige Fett schlagartig abgekühlt und ein feines Granulat mit gleichmäßigen Partikelgrößen entsteht. Dieses lässt sich sehr homogen mit den anderen Komponenten vermischen, so dass das Endprodukt eine deutlich höhere Stabilität aufweist. Infolge der begrenzten Partikelgröße, wachsen die Fettkristalle nicht über die Partikelgröße hinaus und bleiben daher fein verteilt im Produkt erhalten. Das erfindungsgemäße Granulat ist schüttfähig, leicht dosierbar und somit einfacher, schneller und billiger weiterzuverarbeiten. Durch die feine Dispersion der Einzelkomponenten im Produkt wird es möglich, den Anteil an Emulgatoren und Stabilisatoren zu reduzieren, teilweise sogar gänzlich auf diese zu verzichten. So hergestellte Produkte besitzen eine höhere Qualität. Vor allem wird durch die feinere Verteilung der Fette in dem Lebensmittelprodukt der Geschmack wesentlich verbessert.

Die Erfindung eignet sich insbesondere zur Verarbeitung von tierischen Fetten zu Fleischprodukten, Hamburgern, Wurstwaren, Fleischpasten, Geflügelprodukten, Fischprodukten und Fischpasten.

Die Erfindung sowie weitere Einzelheiten der Erfindung werden im Folgenden anhand von dem in der Zeichnung dargestellten Ausführungsbeispiel näher erläutert. Hierbei zeigt
- Figur 1: eine Vorrichtung zur Durchführung des erfindungsgemäßen Verfahrens.
- Figur 2: einen Vergleich des SFC-Anteils von konventionell hergestelltem Fett und erfindungsgemäß hergestelltem Fett und
- Figur 3: einen Vergleich des SFC-Anteils eines konventionell hergestellten Fett-Öl-Gemischs und eines erfindungsgemäß hergestellten Fett-Öl-Gemischs.

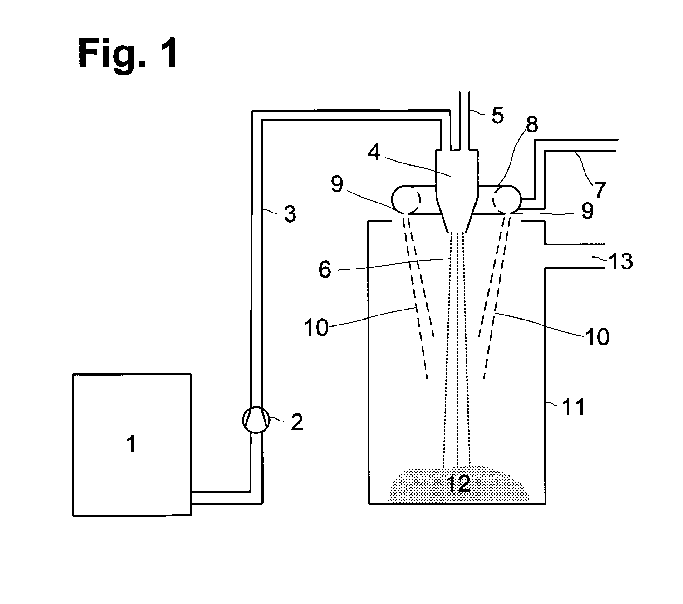

Figur 1 zeigt eine Vorrichtung zur Herstellung von feinen Öl- oder Fettpartikeln aus tierischen Fetten, die anschließend mit weiteren Zutaten zu einem Lebensmittelprodukt verarbeitet werden. Das flüssige Fett oder das Öl werden in einem Speicherbehälter 1 vorgehalten. Bei der Verwendung von Fett wird dieses zuvor bis knapp über dessen Schmelzpunkt erhitzt und dadurch verflüssigt.

Das Öl oder Fett wird mittels einer Pumpe 2 bei einem Druck zwischen 1,5 und 8 bar über eine Leitung 3 zu einer Zweistoffdüse 4 gefördert. Der Zweistoffdüse 4 wird über Leitung 5 außerdem gasförmiger Stickstoff als Zerstäubergas zugeführt. In der Düse 4 wird das flüssige Fett oder Öl mit dem Zerstäubungsgas gemischt und als Zwei-Phasen-Strömung in einen Produktbehälter 11 gestrahlt. Das flüssige Fett oder Öl liegt in diesem Zwei-Phasen-Gemisch als fein verteilte Tröpfchen 6, vorzugsweise mit einer Tröpfchengröße zwischen 10 und 500 Mikrometer, vor. Die Tröpfchengröße kann durch Variation des Drucks des Zerstäubungsgases und/oder des Durchsatzes an flüssigem Fett oder Öl gesteuert werden.

Die Abkühlung der Fett- oder Öltröpfchen erfolgt durch Wärmeaustausch mit kryogenem Stickstoff. Hierzu wird flüssiger Stickstoff über Leitung 7 einer Ringleitung 8 zugeführt. Die Ringleitung 8 ist konzentrisch um die Zweistoffdüse 4 angeordnet und besitzt an ihrer Unterseite mehrere Austrittsöffnungen 9, aus denen feine Strahlen 10 flüssigen Stickstoffs ausgestoßen werden. Die Strahlen 10 kryogenen Stickstoffs sind schräg nach unten und innen ausgerichtet und treten mit den Fett- oder Öltröpfchen 6 in Wärmeaustausch, wobei sich die Fett- oder Öltröpfchen 6 zu kleinen Partikein 12 verfestigen und am Boden des Produktbehälters 11 sammeln. Der als Kühlmedium eingesetzte flüssige Stickstoff verdampft und wird zusammen mit dem Zerstäubungsgas über einen Abzug 13 abgesaugt.

Die erzeugten festen Fett- oder Ölpartikel werden dann als Ausgangsstoff für die Herstellung von Lebensmitteln verwendet.

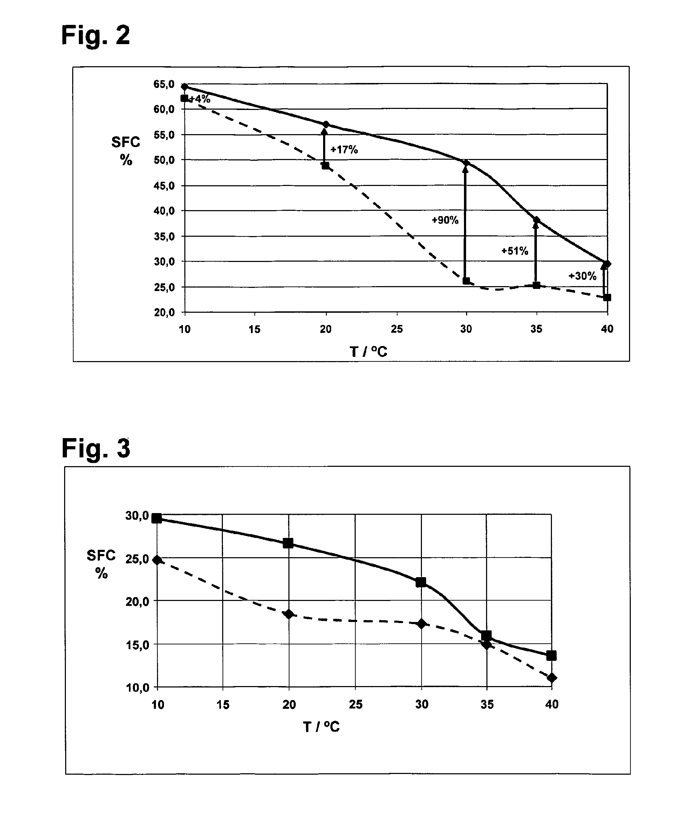

In Figur 2 sind der SFC-Anteil, das heißt der Anteil der festen Fettbestandteile aus einer für Fette üblichen NMR-Analyse, eines erfindungsgemäß durch Schockkühlung hergestellten Fettes und der SFC-Anteil eines auf herkömmliche Art und Weise in einem Kratzkühler gewonnenen Fettes dargestellt. Die obere durchgezogene Kurve bezieht sich auf das erfindungsgemäß hergestellte Fett, die untere gestrichelte Kurve auf das herkömmlich hergestellte Fett. Man erkennt deutlich, dass der Anteil der festen Bestandteile im Fett bei Verwendung der Erfindung über den gesamten Temperaturbereich von 10 °C bis 40 °C wesentlich größer ist. Der SFC-Anteil im Fett hat entscheidenden Einfluss auf die Qualität des daraus hergestellten Lebensmittelprodukts, wobei in der Regel ein hoher SFC-Anteil die Qualität des Produkts erhöht.

Figur 3 zeigt einen Vergleich des SFC-Anteils eines erfindungsgemäß hergestellten Fett-Öl-Gemischs (durchgezogene Linie) und eines auf herkömmliche Weise gewonnenen Fett-Öl-Gemischs (gestrichelte Linie). Auch hier ist deutlich der erhöhte SFC-Gehalt bei Einsatz des erfindungsgemäßen Verfahrens zu erkennen.

## Patentansprüche

1. Verfahren zur Herstellung eines Lebensmittelprodukts, welches tierische Fette und weitere Zutaten enthält, **dadurch gekennzeichnet, dass** zumindest ein Teil des Fettes in die flüssige Phase gebracht, im flüssigen Zustand versprüht (6), durch Wärmeaustausch, insbesondere direkten Wärmeaustausch, mit einem tiefkalten flüssigen Gas (10), bevorzugt mit flüssigem Stickstoff, schockartig abgekühlt und in ein Granulat (12) überführt wird und dass das Granulat (12) mit den weiteren Zutaten zu dem Lebensmittelprodukt verarbeitet wird.

2. Verfahren nach Anspruch 1, **dadurch gekennzeichnet, dass** das Granulat (12) mit den weiteren Komponenten bei einer Temperatur von weniger als 25°C, bevorzugt im Temperaturbereich von 0°C bis 15 °C, verarbeitet wird.

3. Verfahren nach Anspruch 2, **dadurch gekennzeichnet, dass** das Granulat (12) mit den weiteren Komponenten bei einer Temperatur von weniger als 0°C verarbeitet wird.

4. Verfahren nach einem der Ansprüche 1 bis 3, **dadurch gekennzeichnet, dass** das Granulat (12) eine Teilchengröße zwischen 0,1 und 1000 Mikrometer besitzt.

5. Verfahren nach einem der Ansprüche 1 bis 4, **dadurch gekennzeichnet, dass** alle in dem Lebensmittelprodukt enthaltenen tierischen Fette in Form von Granulat (12) verarbeitet werden.

6. Verfahren nach einem der Ansprüche 1 bis 5, **dadurch gekennzeichnet, dass** Fleisch-, Wurst- oder Fischprodukte, insbesondere Wurstwaren, Hamburger, Fleischpasten oder Geflügelprodukte, hergestellt werden.
